# EUROPEAN PATENT SPECIFICATION

(11) **EP 2 116 128 B1**
(45) Date of publication and mention of the grant of the patent: **26.10.2011**
(21) Application number: 09396006.0
(22) Date of filing: 06.05.2009
(51) Int. Cl.: A01G 23/083

(54) **Crane for forest machine**
Kran einer Forstmaschine
Grue d'une machine de sylviculture

(30) Priority: 09.05.2008 FI 20080153 U
(43) Date of publication of application: 11.11.2009
(73) Proprietor: Stenberg, Harri, 58200 Kerimäki (FI)
(72) Inventor: Stenberg, Harri, 58200 Kerimäki (FI)
(74) Representative: Pitkänen, Hannu Alpo Antero

(56) References cited:
- WO-A-02/45482

## Description

The invention relates to a crane for a forest machine according to the preamble of claim 1.

A crane moving a harvester head or a timber head of a forest machine most usually comprises two booms rotatably fastened in each other and in a turntable rotatable in relation to the vertical axle in a work machine being the base machine of the forest machine, the first of which is often called a lifting boom and the second a transfer boom. The turntable as well as the lifting and transfer booms are generally rotated with hydraulic actuators the motion speed of which can be adjusted with control levers or equivalents in the cabin of the work machine. By rotating the lifting and transfer booms, the harvester head can thus be moved upwards and downwards and nearer and farther from the fastening point of the work machine and on the turntable the crane can be rotated in relation to the work machine to left and right in a way required by the operation of the forest machine. Furthermore, there may be at least one measuring sensor for determining a distance of a crane head and/or angles between a fastening device, a lifting boom and/or a transfer boom.

Such a crane is known e.g. from WO 02/45482 A1.

Adjusting the motion speed of the hydraulic cylinders in the boom parts is stepless in recent forest-machine cranes, whereby the suitable motion speed of the crane head can be adjusted irrespective of the location of the crane head. However, the adjustment of the motion speed in recent cranes does not consider the fact the motion speed of the crane head depends on the angles between the crane joints (angles between boom parts) and the distance of the crane head in relation to the fastening point of the crane (rotation of crane in relation to vertical axle). A disadvantage of this property is that, in some situations, the speed adjustment is extremely sensitive i.e. a small change of the control lever increases the motion speed of the crane head considerably. For example, when moving the crane head horizontally to left or right in relation to the work machine, the motion speed of the crane head increases extremely easily when the crane head is far from the work machine. Therefore, moving the harvester head in these situations requires high accuracy and carefulness, which in many cases increases the demanding and stressful nature of the operator's work, among others.

The object of the invention is to provide a forest-machine crane by means of which the above-mentioned problems related to recent forest-machine cranes are eliminated. A particular object of the invention is to introduce a forest-machine crane in which the motion speed of the crane head corresponding the same position of the control lever varies considerably less than previously depending on the location of the crane head and the angles between the boom parts of the crane. Furthermore, an object of the invention is to introduce a forest-machine crane the operation of which is easier than earlier and requires less accuracy and, thus, is less tiresome and stressful for the harvester operator.

The object of the invention is achieved with a crane for a forest machine which is characterised by what is presented in the characterising section of claim 1.

In a forest-machine crane according to the invention, the crane includes an adjuster device for adjusting the motion speed of the crane head based on measurement data received from the measuring sensor. Moving the harvester head by means of such a crane is easier than with recently known cranes, because in such a crane the motion speed of crane actuators corresponding a specific position of a control lever can be adjusted by means of the adjuster device and the measuring sensor/sensors such that the motion speed of the crane head corresponding the same position of the control lever is always as equal as possible irrespective of the crane head location. This facilitates the accurate control of the crane and also decreases the oscillation of the crane head caused by too quick control motions, among others. Furthermore, it is possible to provide end damping of motions, whereby violent impacts of cylinders are prevented at the end of the motion. Additionally, combining two different motions on the same control lever is enabled, e.g. the automatic operation of a luffing boom and an extender linearly with the same control lever. An advantage of the invention is also that by means of it is provided the stability control of the forest machine and, inter alia, the falling of the machine can be prevented due to too large a load. Generally, it is possible to prevent such operations which cannot be performed or which cause danger. The invention further enables the automatic weighing of loads with different distances (pressure data from actuating cylinder).

Controlling a crane according to the invention causes less burden and stress to the forest-machine operator than recently known cranes, because the operator is not required to consider the excess sensitivity of control when the crane head is far from the fastening point of the crane or when the lifting boom and the transfer boom are in such a position that even a small change in the motion speed of the actuator incurs a great change in the motion speed of the crane head.

In the forest-machine crane according to the invention, the motion speeds are freely adjustable at the whole range of operation and the use of various speed curves is also possible. For example, a quick start-off after which the motion decelerates steplessly. Or a slow start-off after which the motion accelerates steplessly. Or a slow start-off after which the motion accelerates steplessly and decelerates in the end.

Extra sensors on the lift and rotary cylinders enable the automatisation of actuating motions. For instance, in a harvester the location of the booms is acknowledged in a desired tree processing point, after which the crane is transferred at the point of a tree being felled and after the felling cut the crane is automatically controlled to the desired processing point. Combined with a data system of the crane felling head, the crane is made to sort different timber grades automatically in their own piles, which considerably facilitates the operator's work.

Next, the invention will be described in more detail by referring to the enclosed drawing which shows a side view of a forest-machine crane according to the invention.

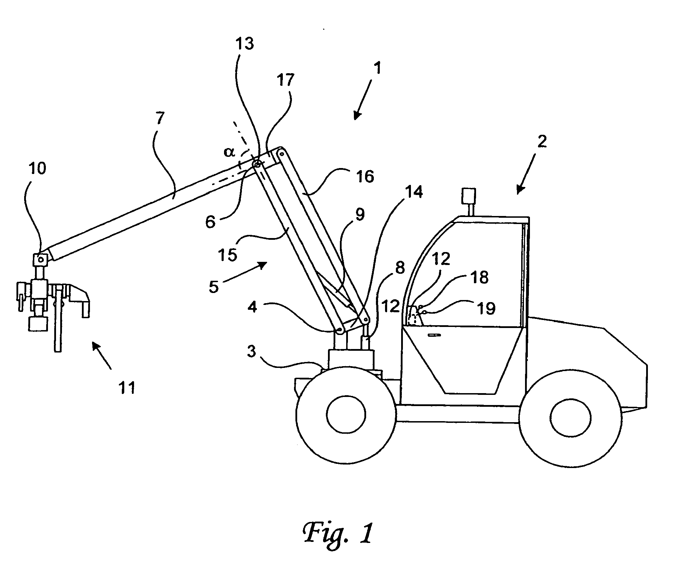

A forest-machine crane 1 shown in Fig. 1 is fastened in a work machine 2 operating as the base machine of the forest machine. The crane includes a turntable 3 operating as a rotatable fastening device, a lifting boom 5 jointed to it with a joint 4 and a transfer boom 7 jointed at its end with a joint 6. The forest-machine crane according to Fig. 1 also includes an actuator 8 rotating the lifting boom, an actuator 9 rotating the transfer boom and a hanging joint 10 at the transfer boom end (crane end) in which is fastened a harvester delimbing head 11 known as such for cutting and delimbing trees. Furthermore, the forest-machine crane according to Fig. 1 includes known-as-such hydraulic hosings, control valves (not shown in the figure) and a control centre 12 of the crane and the harvester head located in the work machine cabin for controlling the above-mentioned actuators 8 and 9, and the harvester delimbing head 11 in a way known as such (required by the operation of crane and harvester head). Additionally, the forest-machine crane according to Fig. 1 includes an angle sensor 13 installed in the joint 6 for measuring an angle a between the lifting boom 5 and the transfer boom 7 during the operation of the crane.

In the forest-machine crane according to Fig. 1, the turntable 3 is a turntable implemented in a way known as such, installed in the body of the work machine 2 which table can be rotated around the vertical axle, i.e. by means of the turntable the lifting boom 5 and the transfer boom 7 can be rotated in various positions such that the delimbing head 11 at the end of the crane can be rotated in a desired direction in relation to the work machine (in front of the work machine and to its left or right). Rotating the turntable occurs in a way known as such by means of a hydraulic motor included in the turntable.

In this embodiment, the lifting boom 5 is constituted of a rotary arm 14, of boom arms 15 and 16 as well as of a joint quadrangle formed of a transfer boom extension 17 extending over the joint 6 of the transfer boom 7 which controls the transfer boom 7 so that the motion of the actuator 9 moving the transfer boom simultaneously moves the joint quadrangle constituting the lifting boom when the transfer boom is rotated. In other words in the embodiment according to Fig. 1, the positions of the lifting boom 5 and the transfer boom 7 are (mechanically) dependent on each other. It should also be noted that, due to the lifting boom constituted this way, the lifting boom and the transfer boom form a kind of a straight-line mechanism, whereby moving the movable end of the actuator 9 of the transfer boom 7 moves the end of the transfer boom 7 along a nearly linear path away from the crane fastening point (turntable) or back towards the fastening point. Therefore, in the embodiment according to the Fig. 1 the crane is such that moving the crane head horizontally farther or nearer to the work machine does not require operating the actuator 8 of the lifting boom. However, it is possible to change with the actuator 8 rotating the lifting boom 5 the direction of this nearly linear transfer motion, i.e., e.g. by rotating the joint quadrangle constituting the lifting boom with the actuator 8 upwards, the motion provided by the transfer boom and the lifting boom can be directed obliquely upwards. Due to the lifting boom 5 and the transfer boom 7 operating this way, it is not necessary to measure the angle between the lifting boom 5 and the turntable 3, because its effect to the motion speed of the crane head at the normal work range of the crane is extremely small. Therefore, the embodiment according to Fig. 1 requires only one angle sensor measuring the angle between the lifting boom 5 and the transfer boom 7 for adjusting the motion speed of the crane head in a way according to the invention.

The actuators 8 and 9 moving the lifting and transfer booms are hydraulic cylinders in the embodiment according to Fig. 1. Thus in the embodiment according to Fig. 1, the speed adjustment of all motions of the crane occurs by adjusting the flow of hydraulic liquid by means of hydraulic control valves (not shown in the figure). These valves are located in suitable positions in a way required by the location and operation of the actuators. These hydraulic control valves are controlled by the control centre 12 which in this embodiment is located in the work machine cabin in a way shown by Fig. 1.

In the embodiment according to Fig. 1, the angle sensor 13, which measures the angle between the lifting boom and the transfer boom, is connected to the control centre 12. The angle sensor 13 is in this case a potentiometer installed in the joint 6, but it can also be some other measuring sensor, such as an encoder directly supplying digital measurement data or e.g. some sensor contactlessly measuring the angle between two pieces, such as an inductive or optical sensor. In this case, the control centre 12 measures the analogous voltage generated by the angle sensor and converts it to digital. The voltage being high, the angle between the lifting boom 5 and the transfer boom 7 is small (acute). Then, the control centre 12 decreases the flow of hydraulic liquid going to the actuator 9 moving the transfer boom 7 corresponding a certain position of a control lever 18 (located in the work machine cabin), because due to the joint quadrangle constituting the lifting boom 5, the motion of the head of the transfer boom 7 is great even in a low motion speed of the moving head of the actuator 9, the angle between the lifting boom 5 and the transfer boom 7 being acute (the crane head being near the crane fastening point), and increases the flow of oil going to the hydraulic motor of the turntable corresponding a certain position of a control lever 19, because the motion speed of the crane head is small when rotating the crane in relation to the vertical axle (i.e. when circling) when the crane head is near the crane fastening point (i.e. the turntable). Suitable changes in the flow of hydraulic liquid can be determined in both cases empirically, calculatorily or in both ways and required corrections can be entered to the control centre 12. Naturally, the motion speed corresponding a certain position of the control lever 18 or 19 does not have to be exactly invariable but the speed can also be adjusted slightly variable e.g. according to the operator's preferences. However, it is important to make the corrections as level and stepless as possible. Due to this, changing the corrections opposite to the above-described when the angle of the lifting boom and the transfer boom grows large (obtuse) has been made as stepless as possible in the embodiment according to Fig. 1 i.e. such that the operator will hardly notice the changes in the correction quantity.

The forest-machine crane according to the invention can be implemented in many aspects different from the embodiment described here as an example. For instance, the forest-machine crane being implemented in a conventional way of a lifting boom rotatably fastened in a turntable and a transfer boom rotatably fastened in it, which rotate independent of each other i.e. the rotary motions of the lifting boom and the transfer boom have not in any way been mechanically coupled to each other, it is also useful to install an angle sensor in a joint between the turntable and the lifting boom in order to measure the effects of the various positions of the crane to the motion speed of the crane head sufficiently accurately. Furthermore, many recently known forest-machine cranes are provided with the so-called extension boom i.e. a transfer boom the length of which can be adjusted. Between the parts of the transfer boom in such cranes, moving usually telescopically in relation to each other, it is possible to install a linear sensor based on the measurement data of which it is possible to correct the motion speeds of the actuators corresponding a certain position of the control lever so that also the effects of changes in the transfer boom length are considered. It should be further noted that the invention does not limit to such forest-machine cranes at the ends of which is fastened a harvester head, but the invention can also be applied to such forest-machine cranes at the end of which is fastened a timber loader or an equivalent device used for loading cut and delimbed trees.

The invention is not limited to the described advantageous embodiments, but it can vary within the scope of the inventive idea presented in the claims.

## Claims

1. A crane for a forest machine (1), which includes a lifting boom (5) rotatably fastened to a work machine with a rotatable fastening device (3) and a transfer boom (7) rotatably fastened in it as well as a fastening element (10) fastened at the end of the transfer boom for fastening a harvester head (11), a timber loader or equivalent, wherein is the crane for a forest machine (1) there is at least one measuring sensor (13) for determining a distance of the crane head and/or angles (α) between the fastening device (3), the lifting boom (5) and/or the transfer boom (7) **characterised in that** the crane (1) includes an adjuster device (12) for adjusting the motion speed of the crane head based on measurement data received from the measuring sensor (13).

2. A crane for a forest machine (1) according to claim 1, **characterised in that** the measuring sensor (13) is an angle sensor which is arranged to measure the angle (α) between the lifting boom and the transfer boom.

3. A crane for a forest machine according to claim 1 or 2, **characterised in that** there are at least two angle sensors (13).

4. A crane for a forest machine according to claim 3, **characterised in that** the first angle sensor is located in a joint (4) between the rotatable fastening device (3) and the lifting boom (5) and the second angle sensor (13) is located in a joint (6) between the lifting boom (5) and the transfer boom (7).

5. A crane for a forest machine (1) according to any one of claims 1-4, which crane includes a transfer boom adjustable of its length, **characterised in that** the transfer boom includes at least one linear sensor for determining the length of the transfer boom.

## Patentansprüche

1. Kran für eine Waldarbeitsmaschine (1), welcher einen Hebeausleger (5), der drehbar an einer Arbeitsmaschine mit einer drehbaren Befestigungsvorrichtung (3) angebracht ist, und einen Übertragungsausleger (7), der drehbar an ihm befestigt ist, als auch ein Befestigungselement (10) umfasst, das am Ende des Übertragungsauslegers zum Befestigen eines Erntekopfs (11), eines Holzladers oder etwas Ähnlichem angebracht ist, wobei an dem Kran für eine Waldarbeitsmaschine (1) es wenigstens einen Messsensor (13) zum Bestimmen eines Abstands des Krankopfs und/oder der Winkel (α) zwischen der Befestigungsvorrichtung (3), dem Hebeausleger (5) und/oder dem Übertragungsausleger (7) vorhanden ist, **dadurch gekennzeichnet, dass** der Kran (1) eine Anpasservorrichtung (12) zum Anpassen der Bewegungsgeschwindigkeit des Krankopfes auf der Grundlage der Messdaten, welche vom Messsensor (13) empfangen werden, umfasst.

2. Kran für eine Waldarbeitsmaschine (1) nach Anspruch 1, **dadurch gekennzeichnet, dass** der Messsensor (13) ein Winkelsensor ist, welcher so angeordnet ist, um den Winkel (α) zwischen dem Hebeausleger und dem Übertragungsausleger zu messen.

3. Kran für eine Waldarbeitsmaschine nach Anspruch 1 oder 2, **dadurch gekennzeichnet, dass** es wenigstens zwei Messsensoren (13) gibt.

4. Kran für eine Waldarbeitsmaschine nach Anspruch 3, **dadurch gekennzeichnet, dass** der erste Winkelsensor in einem Gelenk (4) zwischen der drehbaren Befestigungsvorrichtung (3) und dem Hebeausleger (5) angeordnet ist und der zweite Winkelsensor (13) in einem Gelenk (6) zwischen dem Hebeausleger (5) und dem Übertragungsausleger (7) angeordnet ist.

5. Kran für eine Waldarbeitsmaschine (1) nach einem beliebigen der Ansprüche 1-4, wobei der Kran einen Übertragungsausleger umfasst, welcher in seiner Länge einstellbar ist, **dadurch gekennzeichnet, dass** der Übertragungsausleger wenigstens einen Linearsensor zum Bestimmen der Länge des Übertragungsauslegers umfasst.

## Revendications

1. Grue pour une machine forestière (1), laquelle comprend une flèche de levage (5) fixée de manière rotative à une machine de travail avec un dispositif de fixation rotatif (3) et une flèche de transfert (7) fixée de manière rotative dans celui-ci, ainsi qu'un élément de fixation (10) fixé sur l'extrémité de la flèche de transfert pour fixer une tête d'abatteuse-tronçonneuse (11), un chargeur de bois de construction ou équivalent, dans lequel, dans la grue pour une machine forestière (1), au moins un capteur de mesure (13) est présent pour déterminer une distance de la tête de la grue et/ou d'angles (α) entre le dispositif de fixation (3), la flèche de levage (5) et/ou la flèche de transfert (7), **caractérisée en ce que** la grue (1) comprend un dispositif d'ajustement (12) pour ajuster la vitesse de mouvement de la tête de la grue en se basant sur les données de mesure reçues du capteur de mesure (13).

2. Grue pour une machine forestière (1) selon la revendication 1, **caractérisée en ce que** le capteur de mesure (13) est un capteur d'angle qui est arrangé pour mesurer l'angle (α) entre la flèche de levage et la flèche de transfert.

3. Grue pour une machine forestière (1) selon la revendication 1 ou 2, **caractérisée en ce qu'**il y a au moins deux capteurs d'angle (13).

4. Grue pour une machine forestière (1) selon la revendication 3, **caractérisée en ce que** le premier capteur d'angle est situé dans une jointure (4) entre le dispositif de fixation rotatif (3) et la flèche de levage (5) et le second capteur d'angle (13) est situé dans une jointure (6) entre la flèche de levage (5) et la flèche de transfert (7).

5. Grue pour une machine forestière (1) selon l'une des revendications 1 à 4, laquelle grue comprend une flèche de transfert ajustable en longueur, **caractérisée en ce que** la flèche de transfert comprend au moins un capteur linéaire pour déterminer la longueur de la flèche de transfert.
